# EUROPÄISCHE PATENTANMELDUNG

(11) **EP 3 466 233 A1**
(43) Veröffentlichungstag der Anmeldung: **10.04.2019**
(21) Anmeldenummer: 18198651.4
(22) Anmeldetag: 04.10.2018
(51) Int. Cl.: A01B 73/04, A01B 19/10, A01B 19/04, A01B 23/02, A01B 63/16, A01D 76/00

(54) **SCHWER-STRIEGEL FÜR BODENBEARBEITUNGSGERÄTE**

(30) Priorität: 04.10.2017 DE 202017106019 U
(71) Anmelder: AB. Agri-Broker e.K., 42699 Solingen (DE)
(72) Erfinder: Wollesen, Jörg, 42699 Solingen (DE)
(74) Vertreter: Patentanwälte Vomberg & Schart

(57) **Zusammenfassung**

Die Erfindung betrifft einen Schwer-Striegel für Bodenbearbeitungsgeräte zur Stoppel- und Saatbereitung oder zur Grünlandpflege, mit einem Grundrahmen (10), an dem mittels Klappgelenken beidseitig angelenkte Seitenrahmen (11) und daran angeordnete Zinkenscharen befestigt sind. Um einen Schwer-Striegel der eingangs genannten Art derart weiterzuentwickeln, dass ohne größere Umrüstarbeiten unterschiedliche Böden mit optimalem Arbeitsergebnis bearbeitet werden können ist erfindungsgemäß vorgesehen, dass an den Seitenrahmen (11) zusätzlich Außenrahmen (12) mit daran angeordneten Zinkenscharen beidseitig angelenkt sind, wobei die Zinkenscharen am Grundrahmen (10), am Seitenrahmen (11) und am Außenrahmen (12) jeweils separat höhenverstellbar sind, um eine Eingriffshöhe der Zinken (25) im Boden variieren zu können, und dass in einer Zinkenschar am Grundrahmen (10), am Seitenrahmen (11) und/oder am Außenrahmen (12) ein Teil der Zinken (25), vorzugsweise jede zweite Zinkenreihe wahlweise derart schwenkbar ist, dass diese Zinkenreihe oberhalb des Bodens liegt.

## Beschreibung

Die Erfindung betrifft einen Schwer-Striegel für Bodenbearbeitungsgeräte zur Stoppel- und Saatbereitung oder zur Grünlandpflege, mit einem Grundrahmen, an dem mittels Klappgelenken beidseitig angelenkte Seitenrahmen und daran angeordnete Zinkenscharen befestigt sind.

Ferner betrifft die Erfindung einen Schwer-Striegel für Bodenbearbeitungsgeräte zur Stoppel- und Saatbereitung oder zur Grünlandpflege mit mehreren Zinken.

In der Praxis wird zwischen leichtgebauten Pflegestriegeln mit relativ dünnen, ca. 8 mm im Durchmesser dicken Federzinken, deren Länge bis zu 50 cm beträgt, mittleren 10-12 mm im Durchmesser gebauten, sowie im Durchmesser 14 mm oder 16 mm dicken Zinken zum Striegeln unterschieden. Die erstgenannten Federzinken werden insbesondere zur Zerstörung von Unkrautkeimlingen verwendet. Demgegenüber werden Schwer-Striegel der anmeldungsgemäßen Art primär zur Einebnung (Planierung) bei einem gleichzeitigen Aufbrechen und Zerbröckeln von Krusten und Stoppeln nach einer Raps- oder Getreideernte bzw. zur Grünlandvitalisierung durch Beschädigung des Grassodens verwendet. Die Schwer-Striegelzinken werden demgemäß biegefester ausgebildet. Es ist auch bekannt, dass die Art der Federbiegung, der Anstellwinkel der Zinken, der Abstand der Zinken in einer Zinkenschar sowie die Positionierung der Zinken und deren Eindringtiefe in den Boden für das Ergebnis der Bodenbearbeitung von entscheidender Bedeutung sind.

Die Bodenbearbeitungsgeräte werden zumeist an einen Schlepper in Form einer Zugmaschine angehängt, die zumeist mäanderförmig die Ackerfläche abfährt. Zur Steigerung der Effizienz eines Bodenbearbeitungsgerätes ist eine möglichst große Bearbeitungsbreite wünschenswert. Andererseits sollte eine Landmaschine auch eine im Straßenverkehr maximal zulässige Transportbreite nicht überschreiten. Um ein jeweiliges Montieren- und Demontieren der Maschinenteile bei unterschiedlichen Einsätzen in entfernt liegenden Orten zu verhindern, ist es bereits bekannt, die Bodenbearbeitungsgeräte mit einem Grundrahmen und beidseitig angelenkten Seitenrahmen auszustatten, die über Klappgelenke miteinander verbunden sind. Die Seitenrahmen, an denen wie auch am Grundrahmen Zinkenscharen befestigt sind, werden zu Transportzwecken aufwärts geschwenkt bzw. zur Herstellung der notwendigen oder gewünschten Arbeitsbreite wieder heruntergeschwenkt.

Es ist Aufgabe der vorliegenden Erfindung einen Schwer-Striegel der eingangs genannten Art derart weiterzuentwickeln, dass ohne größere Umrüstarbeiten unterschiedliche Böden mit optimalem Arbeitsergebnis massiver bearbeitet werden können.

Diese Aufgabe wird durch einen Schwer-Striegel nach Anspruch 1 gelöst, der dadurch gekennzeichnet ist, dass an den Seitenrahmen zusätzlich Außenrahmen mit daran angeordneten Zinkenscharen beidseitig angelenkt sind, wobei die Zinkenscharen am Grundrahmen, am Seitenrahmen und am Außenrahmen jeweils separat höhenverstellbar sind, um eine Eingriffshöhe der Zinken im Boden variieren zu können, und dass in einer Zinkenschar am Grundrahmen, am Seitenrahmen und/oder am Außenrahmen ein Teil der Zinken, vorzugsweise jede zweite Zinkenreihe wahlweise derart schwenkbar ist, dass diese Zinkenreihe oberhalb des Bodens liegt. Mit der beschriebenen Ausführungsform kann der auf die Spitzen der einzelnen Zinken einer Zinkenschar lastende Druck durch drei unterschiedliche Maßnahmen eingestellt werden, nämlich durch eine flache Höheneinstellung, das Abschwenken eines Teils der Zinkenreihen oder durch ein geringfügiges Hochschwenken oder Zurückschwenken des Außenrahmens oder der Außenrahmen.

Vorzugsweise Ausführungsformen der Erfindung sind in den Unteransprüchen beschrieben.

So soll die Höhenverstellbarkeit der Zinkenscharen am Grund-, Seiten- und/oder Außenrahmen über die Höhenverstellbarkeit der Aufhängung erfolgen, vorzugsweise über am Rahmen angehängte Räder mit einer variablen Höheneinstellung. Je nach der gewählten Radstellung, ggf. verbunden mit einer Veränderung des Zinken-Anstellwinkels, lässt sich der Druck auf die Zinken und damit die mögliche Eindringtiefe in den Boden wirkungsvoll verstellen.

Weiterhin vorzugsweise ist vorgesehen, dass die Vorrichtung zur Höheneinstellung dem Verschleiß der Zinken folgt, der bis zum 30 cm betragen kann.

Wählt man jede zweite Zinkenreihe von mehreren hintereinander angeordneten Zinkenreihen hochklappbar, kann durch Abschwenken jeder zweiten Zinkenreihe der Auflastdruck auf jedem Zinken verdoppelt werden. Bei einer "gestaffelten" Anordnung der Zinken einer jeden Zinkenreihe lässt sich auf diese Weise auch der Strichabstand verändern. Dann kann der Schwerstriegel auch auf feuchteren Bodenoberflächen eingesetzt werden.

Die Verwendung eines Außenrahmens, der separat abschwenkbar ist, kann dazu ausgenutzt werden, das Ballastgewicht auf den am Grundrahmen angelenkten Seitenrahmen zu erhöhen; dieses Ballastgewicht wird auf die einzelnen Zinken des Seitenrahmens übertragen. Bevorzugt sind zwischen dem Grundrahmen und jedem Seitenrahmen sowie zwischen jedem Seitenrahmen und den daran angelenkten Außenrahmen Hydraulikzylinder zum Verschwenken der jeweiligen Rahmenteile vorgesehen. Diese im Prinzip nach dem Stand der Technik bekannte Maßnahme schafft den Vorteil, dass die Verschwenkung der Seiten- und/oder Außenrahmen vom Zugfahrzeug aus gesteuert werden kann.

Um eine ausreichende Stabilität und Funktionsfähigkeit, insbesondere beim Einebnen von Böden, zu gewährleisten, beträgt der Zinkendurchmesser 10 mm bis 30 mm, insbesondere 18 mm bis 20 mm bei einer Zinkenlänge von 60 cm bis 100 cm. Die Zinken mit einem Mindestdurchmesser von 18 mm liefern im Vergleich zu Zinken mit einem Durchmesser von 16 mm einen ca. 50 % größeren Widerstand.

Nach einer weiteren Ausgestaltung ist der Zinkenanstellwinkel zwischen 5° und 90 °, vorzugsweise zwischen 5° und 85° verstellbar. Die Zinken können als Solo- oder Doppelzinken ausgebildet sein.

Zur Erhöhung der Verschleißfestigkeit sind die Zinken an ihrer Spitze mit einer bis zu 20 cm langen Beschichtung versehen, vorzugsweise aus Hartmetall. Wie bereits vorstehend erwähnt, sind die Zinken an - in Fahrtrichtung betrachtet - hintereinander angeordneten Aufhängungen lagerversetzt angeordnet, vorzugsweise derart, dass die Zinken der nachfolgenden Reihe jeweils mittig in Bezug auf zwei Zinken der vorangehenden Reihe liegen.

Die Zinken sind nach einer bevorzugten Ausgestaltung der Erfindung einzeln oder gruppenweise lösbar befestigt, so dass sie nicht nur im Verschleißfall auswechselbar, sondern auch gegen andere Arbeitsorgane zur Bodenbearbeitung austauchbar sind. Es ist auch vorgesehen, dass Zinkenspitzen lösbar an den Zinken befestigt sind und dass nur die Zinkenspitzen durch andere Arbeitsorgane ausgetauscht werden. Hierzu sind die Zinken, die alternativen Arbeitsorgane und/oder die Zinkenspitzen mittels eines Schnellverschlusses am Bodenbearbeitungsgerät oder am Zinkenende selbst zu befestigen, insbesondere über eine Steck-, Klemm oder Schraubverbindung. Auch ein seitliches Verschweißen der alternativen Arbeitsorgane ist möglich.

Bei den genannten austauschbaren Arbeitsorganen handelt es sich insbesondere um schmale Flügelschare, Dreiecksklingen, insbesondere Einsteck-Dreiecksklingen, Rundscheiben oder Drehscheiben. Solche Drehscheiben weisen vorzugsweise einen Durchmesser von bis zu 7 cm auf und werden vorzugsweise parallel zum Boden geführt. Die angulare Ausrichtung der Arbeitsorgane, insbesondere der Drehscheiben, wird über die Zinken festgelegt, die zwischen Anstellwinkeln zwischen 5° und 90° verstellbar sind. Variierende Bodenverhältnisse vor oder neben den Drehscheiben, insbesondere unterschiedlich harte Bodenoberflächen führen dazu, dass sich die Drehscheiben drehen und die vergleichsweise härteren Bodenbereiche aufbrechen. Ergänzend kann zum Aufbrechen harter Bodenbereiche eine oder mehrere Meißelscharen vorgesehen sein.

Bei einem Austausch der Arbeitsorgane müssen nicht alle Zinken ausgetauscht werden, sondern es ist vorzugsweise vorgesehen, dass nur ein Teil der Zinken durch andere Arbeitsorgane ersetzt werden, so dass sich die individuellen Arbeitseingriffe ergänzen. Beispielsweise ist es bei Zinken mit einem Durchmesser von 20 mm und einem Strichabstand von 50 mm vorgesehen, dass das ergänzende Arbeitsorgan ca. mindestens 60 mm breit ist, so dass sich die Eingriffsbereiche überlappen und die Bodenoberfläche vollständig bearbeitet wird. Hierdurch kann die gesamte Bodenoberfläche ganzflächig und flach durchgeschnitten werden, insbesondere auch Futterstoppel, Grasstoppel, Kleegrasstoppel und Kleestoppel und nicht nur Getreide, Rapsstoppel oder andere flachgemähte Stoppeln. Die Bodenbearbeitung wird bei trockenen bis feuchten Bodenoberflächen durchgeführt, weil bei nassen Bodenoberflächen der Boden des Gerätes durch Tonanteile des Bodens verkleben kann.

Damit die Arbeitsorgane parallel zur Bodenoberfläche geführt werden, sind die Zinken, die mit den Arbeitsorganen lösbar verbunden sind, bis zu 90° nach unten verschwenkbar. Sobald konstruktionstechnisch indessen geringere maximale Anstellwinkel der Zinken vorgesehen sind, werden die Arbeitsorgane in einem entsprechenden Winkel an den Zinken befestigt, so dass der Anstellwinkel ausgeglichen wird und eine horizontale Bodenbearbeitung erfolgen kann. Die Arbeitsorgane können so ausgestaltet sein, dass bei einem Anstellwinkel von beispielsweise 80° die Fläche als Streifen bearbeitet wird. Das Arbeitsorgan kann alternativ eine Spur breiter ausgebildet sein, um die gesamte Fläche zu bearbeiten.

Das Arbeitsorgan kann ähnlich wie ein Spaltkeil als Schneide angeschrägt sein, um die Bodenoberfläche aufzubröckeln.

Darüber hinaus eignet sich der mindestens 6-rahmige Bau des Bodenbearbeitungsgeräts sowie die Hochklappbarkeit jeder zweiten Zinkenreihe dafür, das Gerät als Geräteträger auszustatten, also beispielsweise auf jeder zweiten Reihe anders ausgestaltete Arbeitswerkzeuge zu montieren. Andere Arbeitsorgane können auf beliebige Reihen angeordnet werden, so beispielsweise auch auf der ersten und der letzten Reihe, so dass das Gerät für unterschiedliche Arbeitseinsätze ausgestattet werden kann.

Das Bodenbearbeitungsgerät besitzt nach einer bevorzugten Ausführungsform der Erfindung zusätzlich zu dem vorderen Fahrwerk ein hinteres Fahrwerk, das vorzugsweise absenkbar ausgestaltet ist und/oder gebremste Räder aufweist, so dass es als Anhänger am herkömmlichen Straßenverkehr teilnehmen kann. In dieser Ausgestaltung wird das Bodenbearbeitungsgerät mit einer Zugdeichsel und einem Zugpendel am Zugfahrzeug befestigt. Optional auch mit Unterstützung durch das hintere Fahrwerk und das höhenverstellbare vordere Fahrwerk kann das Bodenbearbeitungsgerät horizontal ausgerichtet werden, so dass die Bodenoberfläche glatt gezogen, flache Mulden zugeschüttet und flache Anhöhungen abgetragen werden können, um mithin das plane und homogene trockene, falsche und richtige Saatbeet zu bereiten.

Die der Erfindung zugrundeliegende Aufgabenstellung wird zudem durch den Schwer-Striegel nach Anspruch 11 gelöst. Erfindungsgemäß weisen die Zinken des Schwer-Striegels zumindest teilweise einen Mindestdurchmesser von 17 mm auf. Mithin können alle Zinken oder nur ein Teil hiervon einen Mindestdurchmesser von 17 mm besitzen, um eine ausreichende Stabilität und Funktionsfähigkeit, insbesondere beim Einebnen von Böden, zu gewährleisten. Vorzugsweise beträgt der Zinkendurchmesser 18 mm bis 20 mm. Unabhängig hiervon ist eine Zinkenlänge von 60 cm bis 100 cm vorgesehen. Die Zinken mit einem Mindestdurchmesser von 17 mm oder 18 mm liefern im Vergleich zu Zinken mit einem Durchmesser von 16 mm einen ca. 50 % größeren Widerstand.

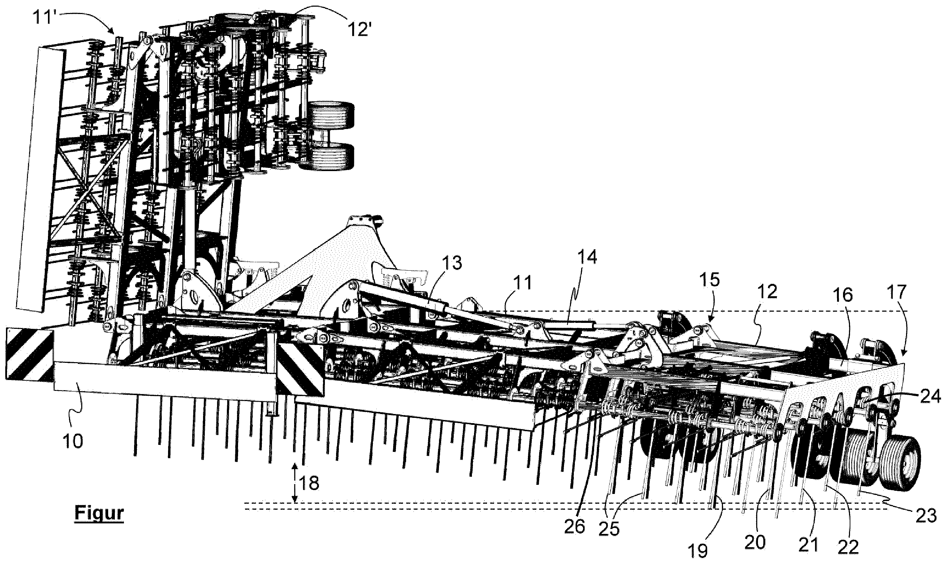

Ein Ausführungsbeispiel der Erfindung sowie weitere Ausgestaltungen werden anhand der Zeichnung erläutert, die eine perspektivische Ansicht eines Schwer-Striegels zeigt.

Die dargestellte Ausführungsform besitzt einen Grundrahmen 10 einen Seitenrahmen 11 und einen Außenrahmen 12, die jeweils durch Hydraulikzylinder 13, 14 schwenkbar sind. Den Seitenrahmen in hochgeschwenkter Stellung zeigt die linke Blatthälfte, in der der Seitenrahmen mit 11' und der Außenrahmen mit 12' bezeichnet sind. Durch Hochschwenken jeweils beider Seiten- und Außenrahmen lässt sich eine Transportbreite von 2,98 m realisieren. Bei abgesenkten Seitenrahmen 11, 11' und hochgeschwenkten Außenrahmen 12, 12' beträgt die Arbeitsbreite bis zu dem mit 15 gekennzeichneten Punkt 6,70 m, wobei je nach Auslenkung der Außenrahmen Breiten von 9,20 m (Bezugszeichen 16) oder 10,40 m (Bezugszeichen 17) realisierbar sind. Der Doppelpfeil 18 demonstriert mögliche Absenkungen der drei Rahmen (Grund-, Seiten-, und Außenrahmen) um 25 cm durch Verschwenkung der Räder. Jeder Rahmen besitzt mehrere Zinkenreihen, wovon die letzte Zinkenreihe des Außenrahmens mit Bezugsziffer 19 und die davor liegenden Reihen mit 20 bis 24 gekennzeichnet sind. Jede Reihe trägt im gleichmäßigen Abstand angeordnet Zinken 25. Wie aus der Abbildung ersichtlich, können die Zinken über die Querstreben 26 unter verschiedenen Anstellwinkeln verschwenkt werden. In anderen Ausführungsformen der Erfindung können auch andere Maße verwendet werden; so könnten die Rahmen 11 und 11' bis zum 60 cm länger gebaut werden, dementsprechend auch die Rahmen 12 und 12'.

Durch die Hydraulikzylinder 13, 14 können der Seitenrahmen und der Außenrahmen unter unterschiedlichen Winkeln relativ zum Grundrahmen, der stets zur Horizontalen angeordnet ist, verschwenkt werden. Eine weitere Verstellmöglichkeit bietet das mögliche Verschwenken der Räder, das auch zur gemeinsamen Höheneinstellung des Grundrahmens, der Seitenrahmen und der Außenrahmen dient und die gewünschte Eindringtiefe der Zinken 25 definiert. Ferner kann die Höheneinstellung dem Zinkenverschleiß folgen, um stets dieselbe Eindringtiefe der einzelnen Zinken in den Boden zu gewährleisten. Im vorliegenden Fall werden vier Radpaare (zwei Tandemräder oder Zwillingsräder) pro Seite verwendet.

In konkreten Ausführungsformen sind die Zinkenreihen 19 bis 24 oder ein Teil davon separat verschwenkbar, so dass die hieran befestigten Zinken aus der Eingriffsstellung durch Hochschwenken entfernt werden können. Dies setzt selbstverständlich voraus, dass die Zinken in Fahrtrichtung betrachtet gegenüber den voranliegenden Zinken leicht versetzt angeordnet sind. Je nach gewähltem Verschwenken der Zinkenreihen 19 bis 24 erhöht sich die Auflagelast der Zinken am Außenrahmen in entsprechender Weise. Dasselbe gilt auch für die gestaffelt angeordneten Zinkenreihen am Seitenrahmen und am Grundrahmen.

Die Auflagekraft auf die Zinken des Seitenrahmens kann zudem durch Hochschwenken des Außenrahmens vergrößert werden.

Die Auflagekraft wird im Wesentlichen durch das Baugewicht des in der Abbildung dargestellten Schwer-Striegels bestimmt, das bis zu 4000 kg betragen kann, im Gegensatz zu bisher handelsüblichen Striegeln, die auf eine Arbeitsbreite von 9 m bezogen ca. 1800 kg bis 2000 kg wiegen. Einen wesentlichen Anteil am Gesamtgewicht haben bei dem erfindungsgemäßen Schwer-Striegel die höhenverstellbaren Tandem-Räder. Die vorgesehenen vier Radpaare wiegen inklusive deren Aufhängung ca. 800 kg. Als Zinken können zum Beispiel Doppel-Federzinken verwendet werden, die ein Gewicht von 5,6 kg/Stück haben. Vorzugsweise sollen im Durchmesser von 18-19 mm dicke Doppelstriegelzinken eingesetzt werden, die 6 kg (oder mehr) wiegen. Im dargestellten Ausführungsbeispiel werden solche Doppelstriegelzinken in sechs Reihen 19 bis 24 eingesetzt, die einen Abstand von 46 cm haben.

## Patentansprüche

1. Schwer-Striegel für Bodenbearbeitungsgeräte zur Stoppel- und Saatbereitung oder zur Grünlandpflege mit einem Grundrahmen, an dem mittels Klappgelenken beidseitig angelenkte Seitenrahmen (11, 11') und daran angeordneten Zinkenscharen befestigt sind,
**dadurch gekennzeichnet, dass**
an den Seitenrahmen (11, 11') zusätzlich Außenrahmen (12, 12') mit daran angeordneten Zinkenscharen beidseitig angelenkt sind, wobei die Zinkenscharen am Grundrahmen (10), am Seitenrahmen (11, 11') und am Außenrahmen (12, 12') jeweils separat höhenverstellbar sind, um eine Eingriffshöhe der Zinken (25) im Boden variieren zu können und dass in einer Zinkenschar am Grundrahmen (10), am Seitenrahmen (11, 11') und/oder am Außenrahmen (12, 12') ein Teil der Zinken, vorzugsweise jede zweite Zinkenreihe wahlweise derart schwenkbar ist, dass diese Zinkenreihe oberhalb des Bodens liegt.

2. Schwer-Striegel nach Anspruch 1, **dadurch gekennzeichnet, dass** die Zinkenscharen am Grund-, Seiten- und/oder Außenrahmen an einer Aufhängung befestigt sind, die höhenverstellbar ist, vorzugsweise über an Rahmen angehängte Räder mit einer variablen Höheneinstellung.

3. Schwer-Striegel nach Anspruch 2, **dadurch gekennzeichnet, dass** die Höheneinstellung dem Zinkenverschleiß folgt.

4. Schwer-Striegel nach einem der Ansprüche 1 bis 3, **dadurch gekennzeichnet, dass** jeweils zwischen dem Grundrahmen (10) und jedem Seitenrahmen (11, 11') sowie zwischen jedem Seitenrahmen (11, 11') und dem daran angelenkten Außenrahmen (12, 12') Hydraulikzylinder (13, 14) zum Verschwenken der Seitenrahmen (11, 11') und/oder der Außenrahmen (12, 12') vorgesehen sind.

5. Schwer-Striegel nach einem der Ansprüche 1 bis 4, **dadurch gekennzeichnet, dass** der Zinkendurchmesser zwischen 10 mm und 30 mm, insbesondere zwischen 18 mm und 20 mm und/oder die Zinkenlänge 60 cm bis 100 cm beträgt.

6. Schwer-Striegel nach einem der Ansprüche 1 bis 5, **dadurch gekennzeichnet, dass** die Zinkenanstellwinkel zwischen 5° und 90°, insbesondere zwischen 5° und 85° verstellbar sind.

7. Schwer-Striegel nach einem der Ansprüche 5 oder 6, **dadurch gekennzeichnet, dass** die Zinken (25) als Solo- oder Doppelzinken ausgebildet sind.

8. Schwer-Striegel nach einem der Ansprüche 5 bis 7, **dadurch gekennzeichnet, dass** die Zinken (25) an ihrer Spitze eine bis zu 20 cm lange Beschichtung aufweisen, vorzugsweise aus Hartmetall.

9. Schwer-Striegel nach einem der Ansprüche 1 bis 8, **dadurch gekennzeichnet, dass** die Zinken (25) an - in Fahrtrichtung betrachtet - hinter einander angeordneten Aufhängungen lageversetzt angeordnet sind, vorzugsweise derart, dass die Zinken (25) der nachfolgenden Reihe jeweils mittig in Bezug auf zwei Zinken (25) der vorangehenden Reihe liegen.

10. Schwer-Striegel nach einem der Ansprüche 1 bis 9, **dadurch gekennzeichnet, dass** die Zinken (25) lösbare Zinkenspitzen aufweisen, die im Verschleißfall gegen neue Zinkenspitzen (25) und/oder andere Arbeitsorgane zur Bodenbearbeitung austauschbar sind.

11. Schwer-Striegel für Bodenbearbeitungsgeräte insbesondere zur Stoppel- und Saatbereitung oder zur Grünlandpflege mit mehreren Zinken,
**dadurch gekennzeichnet, dass**
die Zinken zumindest teilweise einen Mindestdurchmesser von 17 mm aufweisen.
